# EUROPEAN PATENT SPECIFICATION

(11) **EP 3 867 537 B1**
(45) Date of publication and mention of the grant of the patent: **05.10.2022**
(21) Application number: 19801102.5
(22) Date of filing: 15.10.2019
(51) Int. Cl.: F16B 5/02, F16B 5/00, F16B 12/20, F16B 13/04, F16B 12/14

(54) **CONCEALABLE INSERT FOR CONNECTING TOGETHER FLAT ELEMENTS AND THE LIKE**
VERDECKBARER EINSATZ ZUM VERBINDEN VON FLACHEN ELEMENTEN UND DERGLEICHEN MITEINANDER
INSERT ESCAMOTABLE PERMETTANT DE RELIER ENSEMBLE DES ÉLÉMENTS PLATS ET SIMILAIRE(S)

(30) Priority: 19.10.2018 IT 201800009618
(43) Date of publication of application: 25.08.2021
(73) Proprietor: F.LLI MAURI S.p.A., 23852 Garlate (LC) (IT)
(72) Inventor: CERUTTI, Enrico, 23852 Garlate (LC) (IT)
(74) Representative: Stucovitz, Alessandro
(86) International application number: PCT/IB2019/058765
(87) International publication number: WO 2020/079578

(56) References cited:
- EP-A1- 3 111 804
- WO-A1-2016/199024
- ES-A1- 2 247 908

## Description

The present invention relates to a concealable insert for connecting together flat elements such as panels and the like.

It is known in the technical sector relating to the assembly of furniture components such as wardrobes, shelving, bookcases and the like that it is required to fasten together flat elements arranged at right angles to each other, such as the vertical flanks and the structural elements and/or horizonal shelves.

For this purpose, mechanical screw-type elements are known, these being designed to be connected to one of the elements to be fastened and to be screwed into the other element so that the two elements may be brought into contact with each other and stably fastened together.

Although functional, these known elements, however, have the defect that they remain outside the elements to be fastened together, resulting in packaging difficulties, risks of injury and a visibility which is unattractive and not liked by end users.

Also known are inserts which are designed to be inserted in at least partially concealed manner inside panels, such as those described for example in EP 3,111,804 A1, ES 2,247,908 or WO 2016-199024 A1, which however have numerous drawbacks including the fact that they have a structure which is complex, difficult to assemble and install and are not suitable for safe transport either separately or already mounted in one of the two panels.

The technical problem which is posed, therefore, is that of providing an insert for connecting together flat elements which does not result in undesirable projecting parts, thus facilitating packaging and transportation of the furniture units in the form of a flat pack, both when the insert is applied to either one of the elements to be fastened and once the said elements have been joined together, while allowing easy access to the operating means for adjustment of the joining and fastening forces.

In connection with this problem it is also required that this insert should have small dimensions, be easy and inexpensive to produce and assemble and be able to be easily installed at any user location using normal standardized connection means.

These results are obtained according to the present invention by a concealable insert according to the characteristic features of Claim 1.

Such an insert is easy and inexpensive to produce, assemble and install and is also safe when transported and for the end user, being designed to be inserted beforehand with a high degree of precision in a panel and being able to join together two panels without leaving projecting or unattractive visible parts, but being able to be removed or adjusted by means of the visible operating face, resulting overall in significant logistical advantages. The present invention relates to a method for joining together two flat elements, such as panels, using one or more inserts according to the present invention and in accordance with the steps of Claim 10.

With the method according to the invention, once insertion has been performed, the insert results in stable joining together of the two flat elements and is concealingly inserted inside the said hole. This gives rise therefore to parts projecting outside the flat elements, but nevertheless visible and therefore accessible for operation of the head the second bevel gear.

Further details may be obtained from the following description of a nonlimiting example of embodiment of the subject of the present invention provided with reference to the attached drawings in which:
Figure 1: shows an exploded view of the insert according to the present invention;
Figure 2: shows a perspective view of the insert according to Fig.1 assembled;

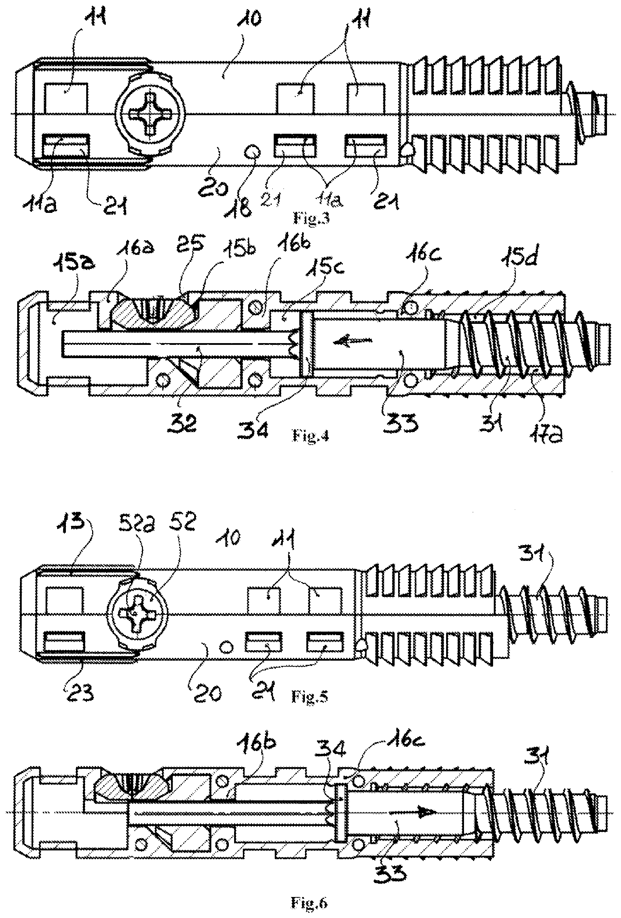

Figure 3: shows a side view of the insert according to Fig.2 with the screw retracted inside;
Figure 4: shows a cross-sectional view of the insert according to Fig. 3;
Figure 5 shows a side view of the insert according to Fig.2 with the screw extracted;
Figure 6: shows a cross-sectional view of the insert according to Fig. 5;
Figures 7a, 7b: show a schematic cross-sectional view and schematic side view, respectively, of the insert according to the invention applied to one of the two elements to be fastened; and
Figures 8a, 8b: show a schematic cross-sectional view and schematic side view, respectively, of the insert according to the invention during gripping of the second element to be joined.

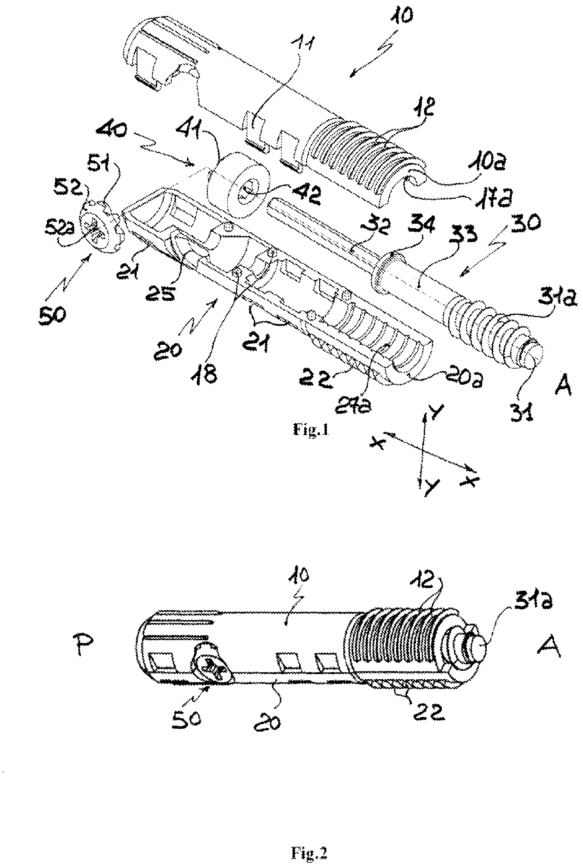

As shown in Fig. 1 and assuming solely for the sake of easier description and without any limiting meaning a pair of reference axes in a respectively longitudinal lengthwise direction X-X of the insert and transverse/radial direction Y-Y perpendicular to the preceding direction, as well as a front part A corresponding to the part for extraction/retraction of the gripping screw for performing joining and a rear part P opposite to the front part in the longitudinal direction X-X, the concealable insert according to the invention comprises:
- a first half-shell 10 and a second half-shell 20, extending in the longitudinal direction X-X, with a preferably substantially semi-circular cross-section, and configured for mutual coupling in the transverse direction Y-Y;
- a shaft 30 extending longitudinally and comprising a front part 31 in the form of a thread 31a and a rear part 32 with a polygonal cross-section. Preferably an intermediate spacing portion 33 is arranged between the threaded front part and the polygonal rear part;
- a first bevel gear 40 with rear teeth 41 and a through-hole 42 with a polygonal cross-section corresponding to the cross-section of the rear part 32 of the threaded shaft 30;
- a second bevel gear 50 with teeth 51 designed to mesh with the teeth of the first bevel gear 40 and an operating face 52 provided with a seat 52a, preferably cross-shaped, for insertion for example of an operating screwdriver not shown.

In detail and according to preferred embodiments:
- the first half-shell 10 has preferably:
   -- peripheral lugs 11 extending parallel to the transverse direction Y-Y and provided with teeth 11a at the respective free end and/or;
   -- sawtooth reliefs 12 projecting parallel to the transverse direction Y-Y from the front outer surface 10a and/or
   -- guiding reliefs 13 projecting parallel to the transverse direction X-X from the rear outer surface 10b and/or;
   -- a substantially semi-circular half-seat 14 formed on the edge of the half-shell 10 and designed to contain partially the second bevel gear 50; and/or
   -- inset longitudinal seats 15a,b,c delimited by transverse partitions 16a,b,c, for partially housing the different parts of the threaded shaft 30.

An intermediate longitudinal seat 15c may in particular be provided with a suitable length in the longitudinal direction and delimited by a rear partition 16b and front partition 16c, respectively, so as to allow the sliding of the intermediate portion 33 from a position retracted towards the rear part P, where the thread 31a is retracted inside the half-shell, to an advanced position, where the thread 31a is extracted from the half-shell.

The longitudinal seat 15d has preferably a first internal-thread part 17a designed to mate with the thread 31a of the shaft 31.

Preferably the second half-shell 20 comprises similarly to and in longitudinal positions corresponding to those of the first half-shell 10:
-- peripheral openings 21 extending parallel to the transverse direction Y-Y and provided with teeth 11a at the respective free end for mating with a respective lug 11 of the first half-shell so as to form a preferred example of means for joining together the two half-shells and/or;
-- guiding reliefs 23 extending parallel to the longitudinal direction X-X in the rear part of the outer surface 20a and/or;
-- sawtooth reliefs 22 projecting parallel to the transverse direction Y-Y from the front outer surface 20a and/or;
-- a substantially semi-circular half-seat 24 formed on a longitudinal edge of the half-shell 20 and designed to contain partially the second bevel gear 50; and/or
-- inset longitudinal seats 25a,b,c,d delimited by transverse partitions 26a,b,c and configured to partially house the threaded shaft 30;
-- the longitudinal seat 25d has a second internal-thread part 27a designed to mate with the thread 31a of the shaft 31.

Preferably, the rear end of the intermediate part 33 of the shaft 30 has an annular edge 34 with a larger diameter for forming an end-of-travel shoulder making contact against the rear partition 16b and front partition 16c of the intermediate seat 15c,16c defined by the seats 15c,16c of each half-shell 10,20 once joining together has been performed.

Once joined together, the two internal-thread half-parts 17a,27a of the respective half-shell 10,20 form a complete internal thread with which the thread 31 of the shaft 31 interacts so that, following a rotation in one or the other direction of the bevel gear 41,51, there is a corresponding rotation of the shaft 31 with its consequent forwards displacement out of or retraction back into the shell.

It is therefore clear how the insert according to the invention is easy and inexpensive to produce and assemble. The insert moreover does not have projecting metal parts and therefore does not require special packaging or precautions for transportation, being safe also for the end user.

It is also envisaged that each half-shell 10,20 may comprise at least one pin 18 projecting in the vertical direction Z-Z and designed to mate with a respective hole of the other half-shell 20;10 for correct centred coupling of the two half-shells.

With this configuration, assembly of the insert according to the invention is performed as follows:
- the first half-shell 10 is provided;
- the first bevel gear 40 is mounted on the polygonal rear part 32 of the shaft 30;
- the shaft 30 is positioned inside the first half-shell 10 so that its different longitudinal parts are contained both in the longitudinal direction and in the transverse direction inside the respective seats 15a,b,c,d;
- the second gear 50 is fitted, being inserted in the transverse direction inside the corresponding half-seat 14;
- the second half-shell 20 is joined together with the first half-shell 10 so that the lugs 11 enter into the corresponding half-openings 21 formed in the second half-shell, causing snap-engagement of the teeth 11a of the former onto the latter so as to produce stable closing with the formation of a whole shell;
- following closing of the shell, only the face 52 with operating seat 52a of the second bevel gear 50 remains visible on the outside of the shell of the insert (Fig. 2).

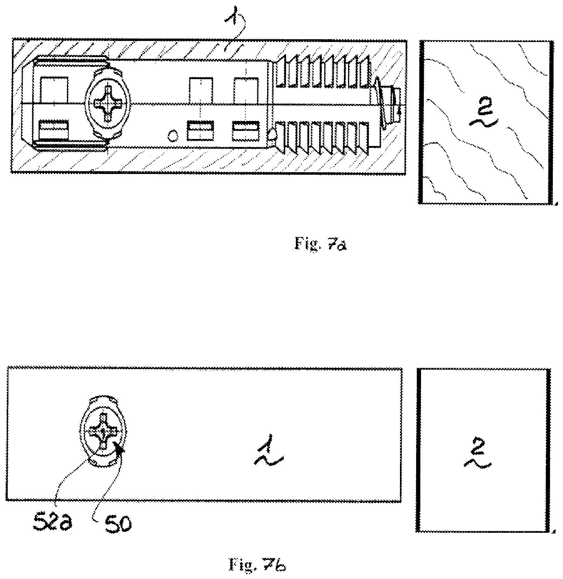

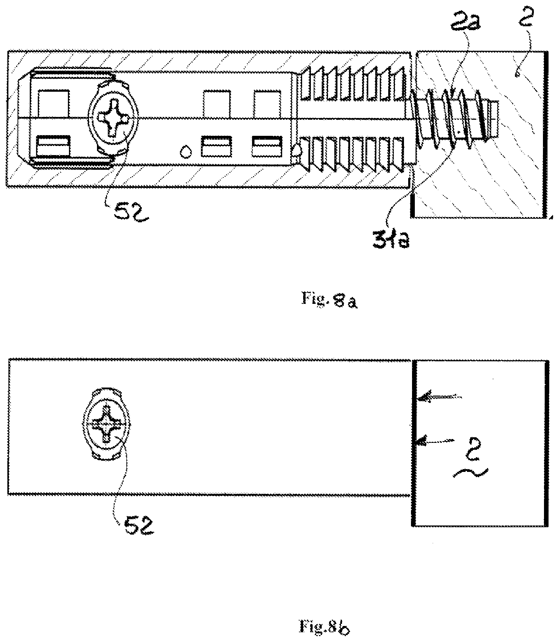

As shown in Figs. 7, 8 for use of the insert in a joining method the following are provided:
- a first element 1 to be fastened with a respective hole 1a having a length such as to allow insertion of the insert, guided by the longitudinal guiding reliefs 13,23 of the shell, over its entire longitudinal length, and a hole in the transverse direction Y-Y at a distance from the front free edge of the panel equal to the distance of the second bevel gear 50 from the front end of the insert; in this way, once insertion has been performed, the insert will be stably retained inside the hole by the radial sawtooth reliefs 12,22 and concealingly inserted inside the said hole so that there are no parts projecting outside the panel, the inset being in any case visible and therefore accessible for operating the head of the second bevel gear 50;
- a second panel 2 with a respective hole 2a in a position opposite to that of the front end of the fastening insert;
- the two panels 1,2 are brought together and the second gear 50 is operated in the clockwise direction so as to cause rotation of the shaft 30 and consequent extraction thereof from the shell and therefore screwing of the screw 31 into the second panel 2 until the two panels come into contact with each other, thus being stably joined together.

In the preferred embodiment described, it is envisaged that the shaft 30 has a self-tapping wood thread and that the hole 2a of the second panel has a smaller longitudinal length so as to form a single guide surface for entry of the thread which, when it is subsequently screwed into the solid material, will ensure better tractional gripping of the second panel.

It is envisaged, however, that the threading of the shaft 30 may be a metric thread or an American pitch thread and that the second panel has, inserted inside it, a metal bush with an internal female thread which matches the thread of the insert so as to provide a joint similar to that described above, but a metal-to-metal one.

It is therefore clear how the insert according to the invention is such that: it may be inserted beforehand with a high degree of precision inside a panel; it joins together two panels without leaving any projecting parts or unattractive visible parts; it does not project and therefore does not require special packaging or precautions; it is safe also for the end user, resulting overall in significant logistical advantages.

Although described in connection with a number of embodiments and a number of preferred examples of implementation of the invention, it is understood that the scope of protection of the present patent is determined solely by the claims which follow.

## Claims

1. Insert for connecting together flat elements such as panels and the like, comprising:
- a first half-shell (10) and a second half-shell (20), extending lengthwise in a longitudinal direction (X-X), with a preferably substantially semi-circular cross-section, and configured for mutual coupling in a transverse direction (Y-Y) perpendicular to the longitudinal direction so as to form a closed housing shell;
- a shaft (30) extending parallel to the longitudinal direction (X-X) and comprising a front part (31), and a rear part (32) having a polygonal cross-section;
- a first bevel gear (40) with rear teeth (41);
- a second bevel gear (50) with teeth (51) designed to mesh with the rear teeth (41) of the first bevel gear (40) and provided with an operating face (52) configured for insertion of an operating tool;
**characterized in that**:
- each half-shell (10,20) has at least one seat (15d,25d) provided with a respective internal half-thread (17a,27a), the seats being arranged so as to form an internal thread (17a;27a) when the two half-shells are joined together to form the housing shell;
- the front part (31) of the shaft (30) is in the form of a thread (31a) configured to mate with the internal half-threads (17a;27a); and **in that**
- the first bevel gear (40) has a through-hole (42) with a polygonal cross-section corresponding to the cross-section of the rear part (32) of the threaded shaft (30).

2. Insert according to Claim 1, **characterized in that** the first half-shell (10) comprises a plurality of peripheral lugs (11) extending parallel to the transverse direction (Y-Y) and provided with teeth (11a) at the respective free end; and **in that** the second half-shell (20) comprises peripheral openings (21) extending parallel to the transverse direction (Y-Y) and provided with teeth (11a) at the respective free end for stable engagement with a respective lug (11) of the first half-shell.

3. Insert according to Claim 1 or 2, wherein each half-shell (10,20) comprises at least one projecting pin (18) or hole extending in the transverse direction (Y-Y) for coupling with a respective hole or pin of the other half-shell (10,20) so as to ensure correct centred coupling of the two half-shells.

4. Insert according to Claim 1, 2 or 3, wherein each half-shell (10,20) comprises guiding reliefs (13,25) projecting parallel to the longitudinal direction (X-X) from the rear outer surface (10b,20b) of the half-shell (10,20).

5. Insert according to any one of the preceding claims, wherein each half-shell comprises a substantially semi-circular half-seat (14,24) formed on the longitudinal edge of the half-shell (10,20) and designed to contain partially the second bevel gear (50), the operating face of which remains accessible.

6. Insert according to any one of the preceding claims, **characterized in that** each half-shell (10,20) comprises in corresponding longitudinal positions a plurality of inset longitudinal seats (15a,25a) delimited by transverse partitions (16a,26a) and designed to partially house corresponding parts of the threaded shaft (30).

7. Insert according to the preceding claim, **characterized in that** the shaft (30) has an intermediate spacing portion (33) between the threaded front part and the polygonal rear part.

8. Insert according to the preceding claim, **characterized in that** the intermediate spacing portion (33) is partially housed inside an intermediate seat (15c,16c) of each half-shell (10,20), the rear end of the intermediate portion of the shaft (30) having an annular edge (34) with a larger diameter for forming an end-of-travel shoulder making contact against a rear partition (16b) and a front partition (16c) which each delimit the intermediate seat (15c, 16c).

9. Insert according to any one of the preceding claims, **characterized in that** each half-shell (10,20) has sawtooth reliefs (12,22) projecting parallel to the transverse direction (Y-Y) from the front outer surface (10a,20a).

10. Method for joining together two flat elements, such as panels, comprising the following steps:
- providing:
• a first flat element (1) with: a joining surface having a first hole (1a) with a length such as to allow the insertion of an insert according to one of the preceding claims over its entire longitudinal length; and
• a second hole extending in a transverse direction (Y-Y) with respect to the first hole (1a) such that the operating head (52) of the second bevel gear (50) is made accessible for operation when the insert is inserted over its whole length inside the first hole (1a);
- inserting an insert according to one of the preceding claims over its whole length inside the first hole of the first panel so that the operating head (52) of the second bevel gear (50) is accessible via said second hole;
- providing a second panel (2) with a respective joining surface opposite to the joining surface of the first panel in the longitudinal direction (X-X);
- bringing together the two joining surfaces of the two flat elements (1,2); and
- operating the second gear (50) so as to cause the advancing movement of the shaft (30) and therefore the screwing of the threaded front part (31) across the joining surfaces and inside the second flat element (2) until the two flat elements are stably joined together.

## Patentansprüche

1. Einsatz zum Verbinden von flachen Elementen wie Paneelen und dergleichen, umfassend:
- eine erste Halbschale (10) und eine zweite Halbschale (20), die sich in einer Längsrichtung (X-X) erstrecken, einen vorzugsweise im Wesentlichen halbkreisförmigen Querschnitt aufweisen und zur gegenseitigen Verbindung in einer Querrichtung (Y-Y) senkrecht zu der Längsrichtung eingerichtet sind, so dass sie eine geschlossene Gehäuseschale bilden;
- eine Welle (30), die sich parallel zu der Längsrichtung (X-X) erstreckt und einen vorderen Teil (31) und einen hinteren Teil (32) mit polygonalem Querschnitt umfasst;
- ein erstes Kegelrad (40) mit einer hinteren Verzahnung (41);
- ein zweites Kegelrad (50) mit einer Verzahnung (51), die so ausgestaltet ist, dass sie mit der hinteren Verzahnung (41) des ersten Kegelrads (40) kämmt und mit einer Betätigungsfläche (52) versehen ist, die zum Einsetzen eines Betätigungswerkzeugs eingerichtet ist;
**dadurch gekennzeichnet, dass**
- jede Halbschale (10, 20) zumindest einen Sitz (15d, 25d) aufweist, der mit einem jeweiligen Innenhalbgewinde (17a, 27a) versehen ist, wobei die Sitze so angeordnet sind, dass sie ein Innengewinde (17a; 27a) bilden, wenn die beiden Halbschalen zur Bildung der Gehäuseschale zusammengefügt werden;
- der vordere Teil (31) der Welle (30) die Form eines Gewindes (31a) aufweist, das so eingerichtet ist, dass es mit den inneren Halbgewinden (17a; 27a) zusammenpasst; und dass
- das erste Kegelrad (40) eine Durchgangsbohrung (42) mit einem polygonalen Querschnitt aufweist, der dem Querschnitt des hinteren Teils (32) der Gewindewelle (30) entspricht.

2. Einsatz nach Anspruch 1, **dadurch gekennzeichnet, dass** die erste Halbschale (10) eine Vielzahl von Umfangsansätzen (11) umfasst, die sich parallel zu der Querrichtung (Y-Y) erstrecken und an dem jeweiligen freien Ende mit einer Verzahnung (11a) versehen sind; und dass die zweite Halbschale (20) Umfangsöffnungen (21) umfasst, die sich parallel zu der Querrichtung (Y-Y) erstrecken und an dem jeweiligen freien Ende mit einer Verzahnung (11a) für einen stabilen Eingriff mit einem jeweiligen Ansatz (11) der ersten Halbschale versehen sind.

3. Einsatz nach Anspruch 1 oder 2, wobei jede Halbschale (10, 20) zumindest einen vorstehenden Stift (18) oder eine sich in Querrichtung (Y-Y) erstreckende Ausnehmung zur Kopplung mit einer jeweiligen Ausnehmung oder einem jeweiligen Stift der anderen Halbschale (10, 20) umfasst, um eine korrekte zentrierte Kopplung der zwei Halbschalen sicherzustellen.

4. Einsatz nach Anspruch 1, 2 oder 3, wobei jede Halbschale (10, 20) parallel zu der Längsrichtung (X-X) von der hinteren Außenfläche (10b, 20b) der Halbschale (10, 20) vorstehende Führungsreliefs (13, 25) umfasst.

5. Einsatz nach einem der vorangegangenen Ansprüche, wobei jede Halbschale einen im Wesentlichen halbkreisförmigen Halbsitz (14, 24) umfasst, der an der Längskante der Halbschale (10, 20) ausgebildet ist und der so ausgestaltet ist, dass er das zweite Kegelrad (50) teilweise aufnimmt, wobei dessen Betätigungsfläche zugänglich bleibt.

6. Einsatz nach einem der vorangegangenen Ansprüche, **dadurch gekennzeichnet, dass** jede Halbschale (10, 20) in entsprechenden Längspositionen eine Vielzahl von eingelassenen Längssitzen (15a, 25a) umfasst, die durch Quertrennwände (16a, 26a) begrenzt sind und die dazu bestimmt sind, entsprechende Teile des Gewindeschafts (30) teilweise aufzunehmen.

7. Einsatz nach dem vorangegangenen Anspruch, **dadurch gekennzeichnet, dass** der Schaft (30) zwischen dem vorderen Gewindeteil und dem hinteren polygonalen Teil ein Zwischenabstandsteil (33) aufweist.

8. Einsatz nach dem vorangegangenen Anspruch, **dadurch gekennzeichnet, dass** das Zwischenabstandsteil (33) teilweise im Inneren eines Zwischensitzes (15c, 16c) jeder Halbschale (10, 20) untergebracht ist, wobei das hintere Ende des Zwischenteils des Schafts (30) eine ringförmige Kante (34) mit einem größeren Durchmesser aufweist, um eine Bewegungsbegrenzungsansatz [*end-of-travel shoulder*] zu bilden, die mit einer hinteren Trennwand (16b) und einer vorderen Trennwand (16c) in Kontakt kommt, welche jeweils den Zwischensitz (15c, 16c) begrenzen.

9. Einsatz nach einem der vorangegangenen Ansprüche, **dadurch gekennzeichnet, dass** jede Halbschale (10, 20) Sägezahnreliefs (12, 22) aufweist, die parallel zu der Querrichtung (Y-Y) von der vorderen Außenfläche (10a, 20a) vorstehen.

10. Verfahren zum Verbinden von zwei flachen Elementen, wie beispielsweise Paneelen, umfassend die folgenden Schritte:
- Bereitstellen:
-- eines ersten flachen Elements (1) mit: einer Verbindungsfläche, die eine erste Ausnehmung (1a) aufweist, deren Länge so bemessen ist, dass sie das Einsetzen eines Einsatzes nach einem der vorangegangenen Ansprüche über seine gesamte Länge ermöglicht; und
-- einer zweiten Ausnehmung, die sich in einer Querrichtung (Y-Y) in Bezug auf die erste Ausnehmung (1a) erstreckt, so dass der Betätigungskopf (52) des zweiten Kegelradgetriebes (50) zur Betätigung zugänglich gemacht wird, wenn der Einsatz über seine gesamte Länge in die erste Ausnehmung (1a) eingesetzt ist;
- Einsetzen eines Einsatzes nach einem der vorangegangenen Ansprüche über seine gesamte Länge in die erste Ausnehmung des ersten Paneels, so dass der Betätigungskopf (52) des zweiten Kegelrads (50) über die zweite Ausnehmung zugänglich ist;
- Bereitstellen eines zweiten Paneels (2) mit einer jeweiligen Verbindungsfläche gegenüber der Verbindungsfläche des ersten Paneels in der Längsrichtung (X-X);
- Zusammenbringen der zwei Verbindungsflächen der zwei flachen Elemente (1, 2); und
- Betätigen des zweiten Zahnrads (50), um die Vorschubbewegung der Welle (30) und damit das Einschrauben des vorderen Gewindeteils (31) über die Verbindungsflächen und in das zweite flache Element (2) zu bewirken, bis die beiden flachen Elemente stabil miteinander verbunden sind.

## Revendications

1. Élément rapporté destiné à relier, l'un à l'autre, des éléments plats tels que des panneaux, et analogues, comprenant :
- une première demi-coque (10) et une seconde demi-coque (20), s'étendant dans le sens de la longueur dans une direction longitudinale (X-X), ayant de préférence une section transversale sensiblement semi-circulaire, et conçue à des fins d'accouplement mutuel dans une direction transversale (Y-Y) perpendiculaire à la direction longitudinale de façon à former une coque formant boîtier fermée ;
- une tige (30) s'étendant parallèlement à la direction longitudinale (X-X) et comprenant une partie avant (31), et une partie arrière (32) ayant une section transversale polygonale ;
- une première roue conique (40) dotée de dents arrière (41) ;
- une seconde roue conique (50) dotée de dents (51) conçues pour engrener avec les dents arrière (41) de la première roue conique (40) et dotée d'une face de mise en œuvre (52) conçue à des fins d'introduction d'un outil de mise en œuvre ;
**caractérisé en ce que** :
- chaque demi-coque (10, 20) comporte au moins un logement (15d, 25d) doté d'un demi-taraudage respectif (17a, 27a), les logements étant disposés de façon à former un taraudage (17a ; 27a) lorsque les deux demi-coques sont assemblées l'une à l'autre pour former la coque formant boîtier ;
- la partie avant (31) de la tige (30) est sous la forme d'un filetage (31a) conçu pour s'apparier avec les demi-taraudages (17a ; 27a) ; et **en ce que**
- la première roue conique (40) comporte un trou traversant (42) ayant une section transversale polygonale correspondant à la section transversale de la partie arrière (32) de la tige filetée (30).

2. Élément rapporté selon la revendication 1, **caractérisé en ce que** la première demi-coque (10) comprend une pluralité de languettes périphériques (11) s'étendant parallèlement à la direction transversale (Y-Y) et dotées de dents (11a) au niveau de l'extrémité libre respective ; et **en ce que** la seconde demi-coque (20) comprend des ouvertures périphériques (21) s'étendant parallèlement à la direction transversale (Y-Y) et dotées de dents (11a) au niveau de l'extrémité libre respective à des fins de prise stable avec une languette respective (11) de la première demi-coque.

3. Élément rapporté selon la revendication 1 ou la revendication 2, dans lequel chaque demi-coque (10, 20) comprend au moins une broche en saillie (18) ou un trou s'étendant dans la direction transversale (Y-Y) à des fins d'accouplement avec un trou ou une broche respectif de l'autre demi-coque (10, 20) de façon à garantir un accouplement centré correct des deux demi-coques.

4. Élément rapporté selon la revendication 1, la revendication 2 ou la revendication 3, dans lequel chaque demi-coque (10, 20) comprend des reliefs de guidage (13, 25) faisant saillie parallèlement à la direction longitudinale (X-X) à partir des surfaces extérieures arrière (10b, 20b) de la demi-coque (10, 20).

5. Élément rapporté selon l'une quelconque des revendications précédentes, dans lequel chaque demi-coque comprend un demi-logement sensiblement semi-circulaire (14, 24) formé sur le bord longitudinal de la demi-coque (10, 20) et conçu pour contenir partiellement la seconde roue conique (50), dont la face de mise en œuvre demeure accessible.

6. Élément rapporté selon l'une quelconque des revendications précédentes, **caractérisé en ce que** chaque demi-coque (10, 20) comprend, au niveau de positions longitudinales correspondantes, une pluralité de logements longitudinaux incrustés (15a, 25a) délimités par des cloisons transversales (16a, 26a) et conçus pour loger partiellement des parties correspondantes de la tige filetée (30).

7. Élément rapporté selon la revendication précédente, **caractérisé en ce que** la tige (30) comporte une partie d'espacement intermédiaire (33) entre la partie avant filetée et la partie arrière polygonale.

8. Élément rapporté selon la revendication précédente, **caractérisé en ce que** la partie d'espacement intermédiaire (33) est partiellement logée à l'intérieur d'un logement intermédiaire (15c, 16c) de chaque demi-coque (10, 20), l'extrémité arrière de la partie intermédiaire de la tige (30) comportant un bord annulaire (34) ayant un diamètre plus grand pour former un épaulement de fin de course établissant un contact contre une cloison arrière (16b) et une cloison avant (16c) qui délimitent individuellement le logement intermédiaire (15c, 16c).

9. Élément rapporté selon l'une quelconque des revendications précédentes, **caractérisé en ce que** chaque demi-coque (10, 20) comporte des reliefs en dents de scie (12, 22) faisant saillie parallèlement à la direction transversale (Y-Y) à partir de la surface extérieure avant (10a, 20a).

10. Procédé d'assemblage, l'un avec l'autre, de deux éléments plats, tels que des panneaux, comprenant les étapes suivantes consistant à :
- utiliser :
• un premier élément plat (1) doté : d'une surface d'assemblage comportant un premier trou (1a) ayant une longueur permettant l'introduction d'un élément rapporté selon l'une des revendications précédentes sur toute sa longueur longitudinale ; et
• un second trou s'étendant dans une direction transversale (Y-Y) par rapport au premier trou (1a) de sorte que la tête de mise en œuvre (52) de la seconde roue conique (50) soit rendue accessible à des fins de mise en œuvre lorsque l'élément rapporté est introduit sur toute sa longueur à l'intérieur du premier trou (1a) ;
- introduire un élément rapporté selon l'une des revendications précédentes sur toute sa longueur à l'intérieur du premier trou du premier panneau de sorte que la tête de mise en œuvre (52) de la seconde roue conique (50) soit accessible par le biais dudit second trou ;
- utiliser un second panneau (2) doté d'une surface d'assemblage respective opposée à la surface d'assemblage du premier panneau dans la direction longitudinale (X-X) ;
- approcher conjointement les deux surfaces d'assemblage des deux éléments plats (1, 2) ; et
- mettre en œuvre la seconde roue conique (50) de façon à provoquer le déplacement d'avance de la tige (30) et par conséquent le vissage de la partie avant filetée (31) sur les surfaces d'assemblage et à l'intérieur du second élément plat (2) jusqu'à ce que les deux éléments plats soient assemblés l'un avec l'autre de manière stable.
